# EUROPÄISCHE PATENTSCHRIFT

(11) **EP 0 523 081 B1**
(45) Veröffentlichungstag und Bekanntmachung des Hinweises auf die Patenterteilung: **27.04.1994**
(21) Anmeldenummer: 91906413.9
(22) Anmeldetag: 16.03.1991
(51) Int. Cl.: C02F 11/10, C10B 53/00, C02F 1/28, C02F 3/10, C02F 3/32, C02F 3/34

(54) **VERFAHREN UND ANLAGE ZUR REINIGUNG VON ABWÄSSERN**
PROCESS AND INSTALLATION FOR PURIFYING WASTE WATER
PROCEDE ET STATION D'EPURATION DES EAUX USEES

(30) Priorität: 22.03.1990 DE 4009249
(43) Veröffentlichungstag der Anmeldung: 20.01.1993
(73) Patentinhaber: PKA PYROLYSE KRAFTANLAGEN GMBH, 73430 Aalen (DE)
(72) Erfinder: WOLF, Bernd, Michael, D-7080 Aalen (DE); DOLDERER, Peter, D-7080 Aalen-Unterkochen (DE); FRISCHKORN, Claus, D-5172 Linnich-Tetz (DE)
(74) Vertreter: Lorenz, Werner, Dipl.-Ing.
(86) Internationale Anmeldenummer: EP9100508
(87) Internationale Veröffentlichungsnummer: WO9114657

(56) Entgegenhaltungen:
- CH-A- 545 254
- DE-A- 2 713 473
- DE-A- 3 727 004
- US-A- 3 640 820
- US-A- 4 407 717

## Beschreibung

Die Erfindung betrifft ein Verfahren und eine Anlage zur Reinigung von industriellen, gewerblichen und kommunalen Abwässern, belasteten Trinkwässern, Sickerwässern oder wässrigen Sonderabfällen von organischen Verunreinigungen und Schwermetallen.

Die allgemeine Umweltsituation erfordert aus ökologischen und ökonomischen Gründen die Verfügbarkeit preiswerter Filterstoffe zur Reinigung belasteter Abwässer, Deponiesickerwässer oder wässriger Sonderabfälle.

Die bisher für Filterzwecke eingesetzte, hochwertige Aktivkohle ist einerseits als Filtermedium sehr teuer, andererseits nur bedingt regenerierbar, da organische Schadstoffe adsorbtiv gebunden und daher nicht bzw. nur teilweise desorbierbar sind. Ferner werden die Aktivkohlefilterfüllungen infolge mechanischer Belastungen insbesondere bei der Desorption, die z.B. zur Regeneration der teueren Aktivkohle aus Kostengründen vorgenommen wird, in sich gelockert und im Porenstrukturgefüge zerstört, wodurch sie zum Teil ihre definierte Ab-, Ad- und Chemisorptionswirkung verlieren. Dabei können Schadstoffe freigesetzt werden, weshalb sie nach ihrer Sättigung einer in der Regel thermischen Entsorgung bedürfen.

Aufgrund der globalen Überlastung der Atmosphäre mit Spurengasen wird einerseits eine Reduzierung der thermischen Umsetzungsprozesse von festen Kohlenstoffverbindungen unabdingbar, andererseits sollen auf dem Gebiet der Abfallentsorgung zur Minimierung der Grundwasser- und Bodenbelastung nurmehr mineralisierte Rückstandstoffe endgelagert werden, was wiederum vorgeschaltete thermische Umsetzungsprozesse erfordert.

Aus der DE-OS 33 47 554, der DE-OS 35 29 445 und der DE-OS 37 27 004 ist bereits ein Verfahren zum Gewinnen von verwertbarem Gas aus Müll durch Pyrolyse bekannt, wobei entsprechend zerkleinerter Müll in eine Entgasungs- bzw. Schweltrommel eingebracht wird. Während das erzeugte Gas über eine Schwelgasabzugsleitung abgezogen wird, wird der Pyrolysereststoff über ein Wasserbad ausgetragen.

Bekannt ist aus der DE-OS 37 27 004 und der DE-OS 35 29 445 ferner die grundsätzliche Möglichkeit, diesen Pyrolysereststoff, der eine aktivkohleartige Struktur besitzt, neben dem Einsatz zur Gasreinigung auch zur Absorbtion der Waschwässer der Pyrolysegasreinigung sowie als Trägersubstanz für anaerobe Mikroorganismen in Biogasanlagen einzusetzen, wobei die Größe der reaktionsfähigen Porenoberfläche vom nichtorganischen Kohlenstoffgehalt, sowie von der Behandlung des auszutragenden Pyrolysereststoffes, z.B. im Wasserbad oder durch Behandlung mit oxidierenden Säuren abhängt.

Bekannt ist letzlich aus den genannten Patentschriften auch die grundsätzliche Möglichkeit, unter Nutzung des Puzzolaneffektes bestimmter Pyrolysereststoffinhaltsstoffe, die, soweit noch nicht durch das zu entgasende Trommeleintragsmaterial vorhanden, nachträglich dem Pyrolysereststoff beigemischt werden können, sowie durch Beimischung definierter Mengen von kalzium- und siliziumhaltigen Verbindungen, formstabile eierbrikettähnliche Gebilde herzustellen, die in Gleichstromschachtöfen zu sandähnlichen, nicht mehr eluierbaren Inertien ausgeglüht (mineralisiert) werden können, wobei keine Verglasung oder lokalisierte Einkapselung der Schwermetalle stattfindet, sondern diese in die mineralische Struktur der komplexen Silikate eingebaut werden.

Der vorliegenden Erfindung liegt nun die Aufgabe zugrunde, ein Verfahren und eine Anlage mit wirtschaftlich vertretbarem Aufwand zu schaffen, durch die Abwässer, belastete Trinkwässer, Deponiesickerwässer oder wässrige Sonderabfälle gereinigt werden können, bzw. den Pyrolysereststoff einer neuen Verwendung zuzuführen.

Erfindungsgemäß wird diese Aufgabe durch die Verwendung des Pyrolysereststoffes nach der im Anspruch 1 definierten Art zur Reinigung industrieller, gewerblicher oder kommunaler Abwässer, belastete Trinkwässer, Deponiesickerwässer oder wässriger Sonderabfälle von organischen Verunreinigungen und Schwermetallen mittels Filtration gelöst.

Ein Verfahren hierfür ist im kennzeichnenden Teil von Anspruch 2 beschrieben. Weitere Ausführungsformen des erfindungsgemäßen verfahrens sind in dem abhängigen Ansprüchen 3-12 beschrieben.

Überraschenderweise hat sich nämlich gezeigt, daß der Pyrolysereststoff bei einem entsprechenden Restfeuchtegehalt sich sehr gut als Filter für schadstoffhaltige Abwässer oder wässrige Sonderabfälle eignet. Dies bedeutet, neben einem Einsatz bei der Müllaufbereitung selbst zur Reinigung der dabei anfallenden Abwässer kann er auch an einem anderen Ort sinnvoll und kostengünstig eingesetzt werden. Dabei ist lediglich dafür zu sorgen, daß nach Möglichkeit stets ein bestimmter Restfeuchtegehalt mit wenigstens annähernd 10% vorzugsweise ca 25 % oder mehr eingehalten wird, da im Falle einer Trocknung der Pyrolysereststoff einen wesentlichen Teil seiner adsorptiven und chemisorbtiven Eigenschaften verliert.

Neben der physikalischen Adsoptionskraft des nassen Pyrolysereststoffes wurde auch eine Chemisorption vor allem der anorganischen Verbindungen an noch vorhandenen polaren Zentren festgestellt, (z.B. CO-, OH- u. COOH- Gruppen).

In unerwarteter Weise ist der Pyrolysereststoff offensichtlich auch in der Lage, alleine oder in Kombination mit Substanzen, die Ionenaustauschcharakter haben und/oder über ihre sonstigen physikalischen Eigenschaften bestimmte Schadstoffe - neben lipophilen Stoffen auch Schwermetalle - irreversibel zu binden.

Weiterhin wurde festgestellt, daß durch physikalische Adsorption an der Porenoberfläche festgehaltenen biologisch abbaubaren Moleküle in Biozönose abbauen, so daß wieder neue Adsorptionsplätze für größer-molekula- re Verbindungen frei werden, um die schädlicheren organischen Wasserinhaltsstoffe wie Aromaten, Halogenverbindungen u.ä. bevorzugt zurückzuhalten und erneut abzubauen. Der Pyrolysereststoff kann nach seiner Sättigung als Filtermedium problemlos abwasserfrei und mit minimalen Emissionen mineralisiert werden.

Dies bedeutet, daß statt der teuren Aktivkohle nunmehr wesentlich preisgünstiger der bei der Müllaufbereitung anfallende Pyrolysereststoff in nahezu gleicher Weise verwendet werden kann.

So kann z.B vorgesehen sein, daß der Pyrolysereststoff nach Erschöpfung seiner physikalischen Adsorptionskraft mit kalziumhaltigen Verbindungen vermischt wird, danach zu formstabilen, wenigstens annähernd brikettähnlichen Pellets gepreßt und anschließend bei wenigsten annähernd 1200 °C oder mehr ausgeglüht wird, wobei die Schwermetalle in die mineralische Struktur von komplexen Kalksilikaten eingebaut werden.

Die dabei entstehenden heißen Abgase können der Verschweleinrichtung, z.B. einer Schweltrommel und/oder der Trocknung feuchter Abfallstoffe vor der Einbringung in die Verschweleinrichtung zugeführt werden. Selbstverständlich können die heißen Abgase jedoch auch zu anderen Heizzwecken verwendet werden.

Alternativ dazu kann auch vorgesehen sein, daß der Pyrolysereststoff nach Erschöpfung seiner physikalischen Adsorptionskraft zu Staub gemahlen und mit Säuren oder Säurengemischen oder Wäscherwassern aus der Rauchgasreinigung, oder mit flüssigen Ionenaustauschern (sogenannte Lixe) derart vermischt wird, daß ein wesentlicher Teil der an dem Pyrolysereststoff gebundene Metalle, Metallverbindungen und Legierungen in Lösung geht bzw. Salze bildet und durch Filtrierung für eine Wiederverwertung abgeschieden werden kann.

Zur Gewinnung des Pyrolysereststoffes für den neuen Verwendungszweck können granulierte oder auf andere Weise ausreichend zerkleinerte Abfallfeststoffe allgemeiner Art mit einem Kohlenstoffanteil von vorzugsweise > 40 Gew.% mittels einer Stopfschnecke unter weitgehender Vermeidung eines unerwünschten Lufteintrages über das Eintragsystem zur Entgasung in eine von außen beheizte oder durch unterstöchiometrische Verbrennung mit der nötigen Entgasungstemperatur versorgten Entgasungstrommel üblicher Bauart eingetragen werden.

Bei normaler Beschickung kann unter Vermeidung von Anbackungen bei auf einen Restfeuchtegehalt von vorzugsweise < 25 % getrockneten Eintragsmaterial und Trommelwandungsaufschlagtemperaturen von vorzugsweise ca. 900 °C eine Entgasung bei < = 600 °C unter einer Verweilzeit < 50 min. durchgeführt werden. Organische Feststoffverbindungen werden voll entgast, so daß der Anteil an flüchtigen organischen Substanzen im Pyrolysereststoff < 5 %, in der Regel kleiner als 1%, liegt. Die im Abfall vor seiner Entgasung enthaltenen Schwermetalle sind mit Ausnahme des wesentlichen Teils des Hg in wenig toxischer Metallform sowie als Sulfide, ca. 97 % des im Müll enthaltenen Chlor als Chloride im Reststoff eingebunden. Chlorierte organische Stoffe sind nicht mehr nachweisbar.

Dabei hat sich als vorteilhaft gezeigt, dem Eintragsmaterial in die Entgasungstrommel im Bedarfsfall andere Abfallstoffe mit so hohem Kohlenstoffgehalt beizumischen, daß das Entgasungsprodukt nämlich der Pyrolysereststoff mehr als 30 Gew.% Kohlenstoff enthält. In diesem Falle hat sich überraschend gezeigt, daß der heiße Pyrolysereststoff vor einem Kontakt mit Luft durch ein Wasserbad gedrückt, zu einem porösen Material mit großer aktiver Porenoberfläche und guten Ab- und Adsorptionseigenschaften umgeformt werden kann.

Die Filtration von hochbelasteten Waschwasserkonzentraten aus der Wäsche von Pyrolysespaltgas (vor dessen Oxidation) über Pyrolysereststoff der vorbeschriebenen Beschaffenheit brachte eine Abnahme der gesamtorganischen Belastung einschließlich der biologisch schwer abbaubaren Stoffe wie z.B. polyzyklische aromatische Kohlenwasserstoffe, Phenole und Chlorphenole um ca. 99 %. Das Waschwasser mit einem CSB von > 4000 mg/l, BSB5 > 500 mg/l, Cyanid > 10 mg/l, Phenole > 80 mg/l, Hg > 1 mg/m³ hatte nach der Filterung Vorfluterqualitat. Im Bedarfsfalle können auch Dibenzodioxine und Dibenzofurane herausgefiltert werden.

Falls erforderlich, läßt sich die aktive Porenoberflache des Pyrolysereststoffes noch dadurch verbessern, daß der Reststoff abweichend von der bei ca. 600 °C liegenden Regelaustragstemperatur mittels Durchleitung durch eine an die Schweltrommelaustragschnecke angeschlossene Erhitzungskammer auf ca. 750 °C aufgeheizt und anschließend erst in das Wasserbad gedrückt wird. Der dafür benötigte thermische Energiebedarf der Erhitzungskammer kann vorzugsweise mittels Wärmetausch aus den heißen Spaltgasen eines Gaswandlers bei ca. 920 °C., mit den Rauchgasen eines Brenners, der Schwelgas direkt verbrennt, oder mit der bei der Kalzinierung des Pyrolysereststoffes anfallenden Warme gedeckt werden. Die Aktivierung kann aber auch über andere Behandlungsmaßnahmen des Pyrolysereststoffes, wie z.B. oxidierenden Medien, erfolgen. Hierfür sind z.B. Salpetersäurepermanganat oder auch CO₂ geeignet.

Im Regelfall - bei Vorhandensein ausreichender Abfallmengen - ist die Porenstruktur des bei ca. 600 °C über ein Wasserbad ausgetragen Pyrolysereststoffes jedoch für einen wirtschaftlichen Filtereinsatz ausreichend.

Die Bindungseigenschaften des Pyrolysereststoffes, insbesondere für Schwermetalle lassen sich steigern bzw. stabilisieren, wenn dem zu entgasenden Eintragsmaterial, soweit solche Stoffe nicht bereits ausreichend in ihm enthalten sind, Schichtsilikate und tonige Mineralien wie z.B. Zeolithe, Bentonite, Montmorillonite und Rodonite zudosiert werden, wobei allerdings beachtet werden sollte, daß durch deren Zumischung der C-Anteil im Entgasungsreststoff nicht unter 30 Gew.% absinkt. Durch diese Mischung von Mineralstoffen mit Kohlenstoffen lassen sich - im Unterschied zu bekannten Aktivkohlefiltern - spezielle Filtereigenschaften z.B. in Bezug auf Schwermetalle - erzeugen.

Auch wurde überraschend herausgefunden, daß der nasse Pyrolysereststoff als Trägermaterial zur Ansiedelung auch von aerob lebenden Bakterienkulturen geeignet ist, die sich vorzugsweise in den Poren kultivieren lassen und die, da sie trotz höherer Umspülungsgeschwindigkeiten im Filtereinsatz keinen Scherkräften ausgesetzt sind, schnell einen stabilen Bakterienrasen bilden können.

Auszufilternde und zu entsorgende biologisch abbaubare Schadstoffe in auch nur geringer Konzentration sowie Abwasserstoßbelastungen werden durch die physikalische Adsorption der großen organischen Moleküle an die Porenoberfläche des mit Bakterienkulturen geimpften Pyrolysereststoffes gebunden und dabei gleichzeitig für einen längerfristigen biologischen Abbauprozeß durch die Mikroorganismen verfügbar gehalten. Die durch den biologischen Abbau hydrophil gewordenen kurzkettigen (harmlosen) Spaltprodukte werden anschließend desorbiert und machen an den Porenoberflächen neue Adsorptionsplätze zur Anlagerung weiterer abzubauender Großmoleküle frei.

Durch diesen biologischen Abbau mit seiner desorbierenden Wirkung wird der Sättigungsprozeß des Pyrolysereststoffes als Filtermedium wesentlich verzögert und die Verfügbarkeit der Filtermasse erheblich verlängert.

Um ein möglichst breites Wirkungsspektum des Filtermediums zu erreichen, hat sich der Einsatz von Kulturen im Batchbetrieb als vorteilhaft erwiesen, insbesondere die Impfung mit Bakterien der Familien Aureobacter, Candida und Cryptococcus.

Zusätzlich wurde überraschenderweise festgestellt, daß der erfindungsgemäß erzeugte Pyrolysereststoff aufgrund seiner Oberflächenstruktur und stofflichen Beschaffenheit ein hervorragendes Substrat für Algen, insbesondere Blau-Grün- und Kieselalgen, bildet, die sich auf der Porenoberfläche ansiedeln, dabei einen gewissen Schutz erhalten und sich sowohl von den Stoffwechselendprodukten der Bakterien, als auch von bestimmten Inhaltsstoffen der zu filternden Abwässer ernähren, die vorteilhaft adsorbtiv in der räumlichen Nähe der Algen und Bakterien festgehalten wurden.

Bei Algenkulturen konnte ferner ein Filtereffekt in Bezug auf Schwermetalle festgestellt werden, die sich im Bedarfsfalle aus dem Algensubstrat rückgewinnen lassen.

Die Algen nehmen das von den Bakterien u.a. produzierte CO₂ auf, ferner anorganische Salze, insbesondere Nitrate, Ammonium und Phosphate. Sofern ein Nitratabbau gewünscht ist, kann dieser durch die Addition von Nährsubstraten, wie z.B. Alkohole, beschleunigt werden.

Durch die geschaffene materielle Zusammensetzung und Oberflächengestaltung des Pyrolysereststoffes mit seinen ab- und adsorbtiven Kräften, wodurch die Schadstoffe in räumlicher Nähe der Kulturen festgehalten werden können, in Kombination mit der Anzucht darauf ansiedelbarer Algen- und Bakterienkulturen, läßt sich überraschend die jeweilige metabolische Wirkung erhöhen und damit ein beachtlicher Synergieeffekt erzielen.

Durch eine Wärmevergleichmäßigung lassen sich bei Bedarf alle chemischen und biologischen Stoffkreisläufe verstarken und beschleunigen, wodurch sich vorzugsweise bei Temperaturen um ca. 27 °C bis 40° die Filterwirkung zusätzlich verbessern läßt.

Auch die Aneinanderreihung verschiedener Filterbecken oder Reaktoren mit Pyrolysereststoff unterschiedlicher Kulturenimpfung, die sich gegenseitig beeinträchtigen würden und getrennt spezielle Abbauleistungen erbringen können, z.B. Abbau bestimmter organischer und anorganischer Schadstoffe (Phosphate oder Stickstoffverbindungen), kann sinnvoll sein, und ist durch die Immobilisierung der Kulturen in den Pyrolysereststoff- poren problemlos möglich.

Da im Gegensatz zu der sehr teuren Aktivkohle als Trägermedium, Pyrolysereststoff aus einer Abfallentsorgung in großen Mengen und kostengünstig verfügbar gemacht werden kann, bedarf es aus ökonomischen Gründen auch keines all zu sparsamen Umgangs mit dem Filterstoff, zumal dessen Entsorgung zu einem inerten, erddeponiebaren oder als Baustoffzuschlagstoff geeigneten Reststoff erfindungsgemäß problemlos wie folgt möglich ist:

Der nasse, durch seinen Einsatz als Filtermasse, schadstoffteil- oder voll gesättigte Pyrolysereststoff, wird mit einer bestimmten Menge Puzzolanen, d.h. silikatischen und aluminatischen Materialien, sowie mit kalziumhaltigen Verbindungen wie Kalk, Kalkhydrat oder Kalkhydratabfall derart vermischt, daß sichergestellt ist, daß das MOL-Verhältnis von SIO₂, AL₂O₃, CaO, ZnO, Fe₂O₃ und/oder MgO einerseits zum gesamten MOL-Anteil der Metalle Blei, Chrom, Mangan, Kadmium, Berylium, Barium, Selen, Arsen, Vanadium, Antimon, Wismut, Strontium und Zirkon mindestens 6:1 beträgt, andererseits, daß das MOL-Verhältnis von Kalzium, Magnesium und Natrium zum gesamten Schwefel, Chlor und Fluor mindestens 2:1 beträgt. Dadurch wird u.a. eine Einbindung des SO₂ möglich.

Nach dieser Vermischung wird das Mischprodukt auf ca. 75 % Trockensubstanz getrocknet und anschließend zwischen 200 und 550 kg/cm² zu eierbrikettartigen Pellets verpreßt. Die Presslinge härten unter normalen Temperaturbedingungen zu formstabilen Gebilden unter Bildung von Kalzium-Silikat-Hydrat, Kalzium-Aluminat-Hydrat und Kalzium-Ferrit-Hydrat aus. Sie können anschließend z.B. in einem Gleichstromschachtofen bei ca. 1200 °C ausgeglüht werden. Dabei erfolgt ein Einbau der Schwermetalle in die mineralische Struktur von komplexen Silikaten, weshalb der Abgasstrom schwermetallfrei, der sandähnliche feste Rückstand entsprechend seiner keramischen Struktur unauslaugbar ist und damit als Baustoff Verwendung finden kann.

Schwefelverbindungen werden in Sulfite oder Sulfate umgewandelt.

Bei einem Kohlenstoffanteil von > 30 % reicht der Heizwert des Pyrolysereststoffes aus, um unter Berücksichtigung der notwendigen mineralischen Beimischmengen und bei Zufuhr ausreichender Verbrennungsluft im Gleichstromschachtofen Temperaturen bis 1300 °C sicherzustellen, so daß der Glührückstand unlöslich ist. Alle vollständig ausgebrannten Brikettrückstände der vorbeschriebenen Art zeigten in Auslaugtests Werte für Cadmium < 0,2 ppm, für Chrom < 0,4 ppm, für Blei < 0,3 ppm, selbst wenn der maximale Metallgehalt im Brikett für Cadmium > 8000 ppm und für Blei > 6000 ppm lag. Im Abgasstrom konnten wegen der Einbindung in das Kristallgitter der entstehenden Silikate keine meßbaren Blei- oder Cadmiumaustragungen festgestellt werden.

Falls sich bei spezieller Nutzung hohe Schwermetallanreicherungen einstellen, die ein Recycling wirtschaftlich machen, kann aus dem gesättigten Pyrolysereststoff vor seiner vorbeschriebenen thermischen Entsorgung durch eine Säureauslaugung oder durch elektrochemische Verfahren der wesentliche Teil der Schwermetalle herausgelöst und dem Recycling zugeführt werden.

Eine erfindungsgemäße Anlage zur Durchführung des Verfahrens wird nachstehend anhand der Zeichnung prinzipmäßig beschrieben.

Es zeigt:
- Fig. 1: das Verfahrensschema zur erfindungsgemäßen Verwendung des Pyrolysereststoffes;
- Fig. 2: die Entgasungstrommel in Prinzipdarstellung im Schnitt.

Da Abfallzerkleinerungs- und Granulierungsanlagen, Zellenradschleusen oder Stopfschnecken zum falschluftarmen Materialeintrag in Entgasungsdrehtrommeln sowie Pyrolyseanlagen einschließlich der Austragsvorrichtung aus der Entgasungstrommel über eine Schneckeneinrichtung durch ein Wasserbad in ihrem grundsätzlichen Aufbau bereits aus den DE-OS 33 47 554, DE-OS 35 29 345 und DE-OS 37 27 004 bekannt sind, werden nachfolgend nur die für die Erfindung wesentlichen Teile näher beschrieben.

Die Abfallstoffe werden entsprechend einem u.a. in der DE-OS 37 27 004 beschriebenen Verfahren für die Eintragung in die Entgasungstrommel aufbereitet.

Über eine Stopfschneckeneinrichtung 1, die mit einer Beimischeinrichtung 2 zur Beimischung für gemahlene Schichtsilikate oder tonige Mineralien bestückt ist, erfolgt der Eintrag in eine als Entgasungstrommel 3 ausgebildete Verschweleinrichtung, in der bei Temperaturen von vorzugsweise < = 600 °C in bekannter Weise Schwelgas erzeugt wird, das über eine Abzugsleitung 4 eine Staubabscheideeinrichtung 5 und eine Zuleitung 4A in einen Hochtemperaturgaswandler 6 oder - alternativ (s. gestrichelte Darstellung der Zweigleitung 40) - in eine Hochtemperaturbrennkammer B mit nachgeschalteter Kesselanlage K, einer Mischkammer M, welcher Kalk zugedüst wird, mit nachgeschalteter Filteranlage F, zugeführt wird.

Die Entgasungstrommel 3 wird von außen durch die Rauchgase eines oder mehrerer Brenner 25a/b beheizt, die auch mit selbsterzeugtem Pyrolysespaltgas betrieben werden können.

Wird das Schwelgas dem Gaswandler 6 zugeführt, was wegen der niedrigeren Abgasmengen und geringeren Schadstoffemissionswerten, insbesondere der Dibenzodioxine- und Dibenzofuranfreiheit des erzeugten Spaltgases (Sauerstoffgehalt < o,6 Vol%) von ökologischem Vorteil ist, erfolgt in diesem die Umwandlung des Schwelgases zu Spaltgas über ein Kohle- bzw. Koksbett, wobei auch aus Abfallstoffen erzeugte Pyrolysereststoff-Briketts eingesetzt werden können.

Ein Gaswandler dieser Art ist z.B. in der DE-OS 33 17 977 beschrieben.

Die Reinigung des in dem Gaswandler 6 erzeugten Spaltgases und seine Nutzungsmöglichkeiten sind z.B. in der DE-OS 37 27 004 beschrieben.

Das bei der Gasreinigung anfallende Waschwasser gelangt in einen Waschwassertank 8 und anschließend in eine Filtereinrichtung 9. Die in der Filtereinrichtung 9 abgetrennten Feststoffe werden über eine Leitung 10 über eine Beimischeinrichtung 11 zusammen mit dem Austrag des Gaswandlers wieder in die Entgasungstrommel 3 eingebracht.

Das von den Feststoffen gereinigte Waschwasser gelangt aus der Filtereinrichtung 9 über eine Rückleitung 12 nach Durchgang durch einen Kühlturm 13 wieder in den Sprühturm 7 der Gaswaschanlage zurück. Ein Teilstrom des gereinigten Waschwassers wird in eine Waschwasserneutralisationsanlage 14 eingeleitet.

Von der Waschwasserneutralisationsanlage 14 aus gelangt das Waschwasser wieder über eine Rückleitung 15 zur Kreislaufbehandlung in den Sprühturm 7, während eine Teilmenge über eine Teilmengenleitung 16A als Zuleitung in eine ein- oder mehrstufige, biologische Filtereinrichtung 17 mit Filterbecken eingeleitet wird, die mit Pyrolysereststoff, der über eine Zuleitung 35 von dem Wasserbadaustrag 23 eingebracht wird, als Filtermedium bestückt ist, wobei die Filtereinrichtung auch zusätzlich mit Algen- und Bakterienkulturen, z.B. im Batchverfahren, geimpft sein kann.

Zur Ergänzung der hierdurch dem Wäscherkreislauf entzogenen Waschwasserteilmenge erfolgt eine Rückleitung des gefilterten Wassers aus der Filtereinrichtung 17 zum Sprühturm mittels einer Teilmengenleitung 18A. Für den notwendigen Sauerstoffeintrag sorgen Luftzufuhrleitungen 27A und über eine Abzugseinrichtung 28A erfolgt der Austrag des abgesunkenen oder als Festbett eingebrachten und gesättigten Pyrolysereststoffes.

Im Bedarfsfall kann eine Vorreinigung dieser Waschwasserteilmenge, wie in der DE-OS 37 27 004 beschrieben, mittels Ozoninjektion erfolgen, in der Regel ist eine solche Maßnahme nicht notwendig.

Ohne eine solche Ozonisierung werden in der Regel 10 % des Pyrolysereststoffes zur Reinigung der Prozeßabwässer der Pyrolyseanlage benötigt. Etwa 90 % des erzeugten Pyrolysereststoffes stehen für externe Reinigungseinsätze zur Verfügung.

Der Pyrolysereststoff wird aus der Entgasungstrommel 3 über einen Wasserbadaustrag 23 ausgetragen. Alternativ kann der Austragsschnecke 20 der Entgasungstrommel und dem Wasserbadaustrag 23 eine Erhitzungskammer 22 zwischengeschaltet werden, die über eine Wasserzufuhrleitung 24 mit Wasser zur Dampfbildung versorgt wird und die mit der Heißgasleitung 25, die als Wärmetauscher ausgestaltet ist, mit der nötigen Wärme versorgt wird, um den Pyrolysereststoff auf ca. 750 °C zu erhitzen.

Die Schweltrommelaustragsschnecke 20 ist mit einer oder mehreren luftdicht arbeitenden Einschubeinrichtungen 21 zur bedarfsweisen Beimischung von Schichtsilikaten oder toniger Mineralien zum Pyrolysereststoff ausgestattet.

Zur Dampferzeugung in der Erhitzungskammer 22 sowie als Medium für das Wasserbad kann das Wasser aus der Filtereinrichtung 17 verwendet werden.

Der Pyrolysereststoff wird feuchtigkeitsgesättigt dem Wasserbad entnommen. Er wird natürlich feucht zwischengespeichert und zum Ort seiner Verwendung transportiert sowie je nach Bedarf über eine Zweigleitung 35B der Zuleitung 35 direkt in eines oder mehrere, auch örtlich voneinander getrennte und/oder hintereinandergeschaltete Filterbecken oder Filtrationsreaktoren 26 als Filtereinrichtung eingebracht, wobei gleichzeitig eine Impfung über nicht näher dargestellte Impfmittel 41 mit den für den biologischen Abbau benötigten Batchkulturen erfolgen kann. Die Filterbecken bzw. Filtrationsreaktoren 26, in denen die Reinigung der industriellen, gewerblichen oder kommunalen Abwässer, belastete Trinkwässer, Deponiesickerwässer oder wässriger Sonderabfälle erfolgt, sind hierzu mit Abwasserzuflußleitungen 16B, Ablaufleitungen 18B und ggf. - falls das zu reinigende Wasser nicht genügend Sauerstoff enthält - Luftzufuhrleitungen 27B für einen dosierten Sauerstoffeintrag ausgerüstet. Über eine Abzugseinrichtung 28B wird vom Boden des Filterbeckens oder Filtrationsreaktors eine Teilmenge des Pyrolysereststoffes kontinuierlich abgezogen und von oben durch unbelasteten Pyrolysereststoff ergänzt. Im Bedarfsfalle kann natürlich auch die Gesamtmenge des Pyrolysereststoffes (z.B. durch Herausnahme des mit Pyrolysereststoff gefüllten Filtereinsatzes bzw. durch Gesamtaustrag) abgezogen und durch unbelasteten ersetzt werden.

Der entnommene Pyrolysereststoff wird zusammen mit dem über die Abzugseinrichtung 28A aus der Filtereinrichtung 17 ausgetragenen Pyrolysereststoff über Leitungen 36A und 36B und einen Sammelbehälter 37 und eine Sammelleitung 38 einer Vermischungsanlage 29 zugeführt, dort bedarfsgemäß mit kalziumhaltigen und silikatischen Stoffen vermischt, in einer Trocknungseinrichtung 30 auf ca. 75 - 80 % Trockensubstanz getrocknet, anschließend in einer Brikettierpresse 31 zu eierbrikettartigen Presslingen geformt und danach zur Ausglühung und Aufbereitung zu einem sandähnlichen Baustoffzuschlagsmaterial in einen Gleichstromschachtofen 32 eingetragen. Dieser ist nicht ortsgebunden. Falls er im Nahbereich der Trocknungseinrichtung 30 und/oder der Filterbecken bzw. Filtrationsreaktoren 26 installiert ist, können seine heißen Abgase über eine Teilrauchgasleitung 33 zur Trocknungsanlage sowie über eine Teilrauchgasleitung 34 zur Steuerung der optimalen biologischen Umsetzungstemperaturen in den Filterbecken verwendet werden.

Wenn die Reinigung und Aufbereitung des Pyrolysegases aus der Entgasungstrommel 3 statt über den Gaswandler 6 über die Hochtemperaturbrennkammer B erfolgt, kann der in der Filteranlage F ausgeschiedene Filterreststoff ebenfalls über eine Zufuhrleitung 39 in die Vermischungsanlage 29 eingebracht werden.

Die in die Filtereinrichtungen 17 und 26 eingeleiteten belasteten Abwässer sind in der Regel im Bereich der Ableitung 18A bzw. 18B vorflutertauglich und können je nach dem Grad der Belastung und Ausbaustufen bis zu Trinkwasserqualität erreichen.

Von der Sammelleitung 38 zu der Vermischungsanlage 29 kann gegebenenfalls auch eine Teilstromleitung 42 abzweigen, die zu einer Vermischeinrichtung 43 führt. In die Vermischeinrichtung 43 wird ein Teilstrom des frischen Pyrolysereststoffes aus der Zuleitung 4A eingeführt und nach Vermischung mit dem Pyrolysereststoff aus der Teilstromleitung 42 über eine Rückführungsleitung 44 wieder dem Filterbecken 17 bzw. dem Filtrationsreaktor 26 zugeführt. Der über die Teilstromleitung 42 zurückgeführte Pyrolysereststoff wird dabei zermahlen, wobei die in ihm vorhandenen Microben in der Vermischeinrichtung 43 dem frischen Pyrolysereststoff beigegeben werden.

Alternativ dazu kann auch der gesamte über die Sammelleitung 38 abgezogene Pyrolysereststoff in einer Mahlvorrichtung (nicht dargestellt) zermahlen werden. Anschließend kann eine Durchmischung bei normaler oder gegebenenfalls auch bei einer auf ca. 60 °C erhöhten Temperatur mit Säuren, Säuregemischen oder sonstigen Lösemitteln, z.B. Komplexbildner, Lösevermittlern und dergleichen erfolgen, wobei die gelösten Schwermetalle über eine - ebenfalls nicht dargestellte - Filtereinrichtung abgetrennt und im Bedarfsfalle auch elektrolytisch zurückgewonnen werden können. Die verbleibenden ungelösten Reststoffe können abschließend wieder der Trocknungs- und Kalzium-Silizium-Vermischungsanlage 29 mit der nachgeschalteten Brikettierpresse 31 zugeführt werden.

Ausdrücklich wird nochmals festgehalten, daß selbstverständlich nicht sämtliche vorstehend beschriebenen Anlagenteile am selben Ort angeordnet sein müssen. So werden z.B. der oder die Filtrationsreaktoren 26 dort sein, wo sich das zu reinigende Abwasser befindet, wenn der Pyrolysereststoff als Ersatz für Aktivkohlefilter eingesetzt wird.

In gleicher Weise können auch die Vermischungsanlage 29, die Trocknungseinrichtung 30, die Brikettierpresse 31 und der Gleichstromschachtofen 32 sich an einem anderen Ort befinden.

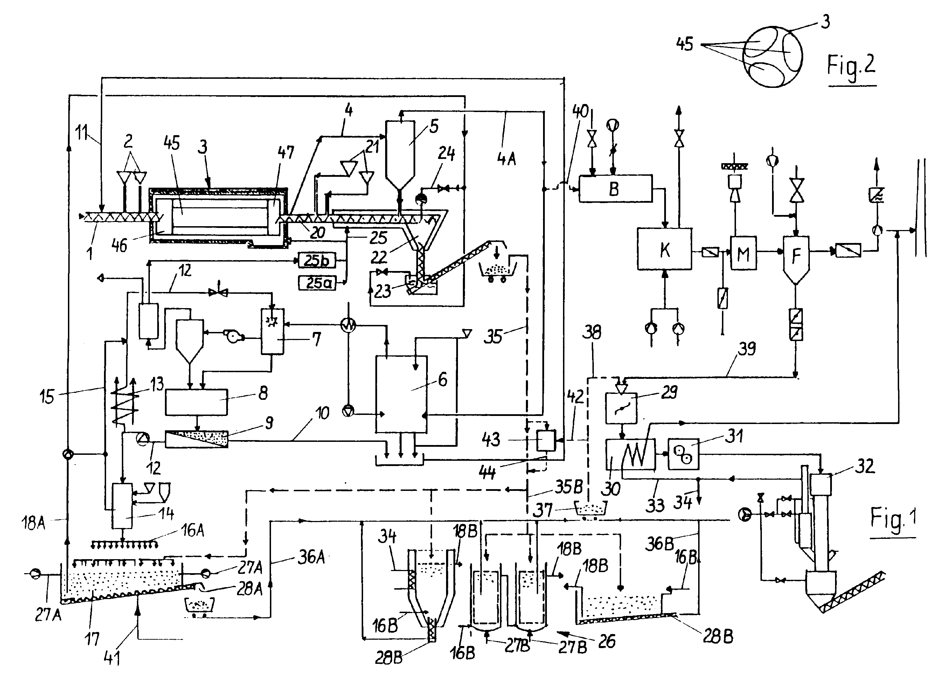

Wie aus der Fig. 2 in Prinzipdarstellung ersichtlich ist, weist die Entgasungstrommel 3 drei elypsoide Röhren 45 auf, die sich in Längsrichtung der Entgasungstrommel 3 erstrecken. Die drei elypsoiden Röhren 45 befinden sich zwischen einer Eintragskammer 46 und einer Austragskammer 47, die jeweils im Bereich der beiden Stirnseiten der Entgasungstrommel 3 angeordnet sind. Die drei Röhren 45 werden von außen beheizt. Der zu entgasende Müll wird über die Stopfschneckeneinrichtung 1 und die Eintragskammer 46 eingebracht, durchläuft die Röhren 45 und wird über die Austragskammer 47 und die Schweltrommelaustragsschnecke 20 ausgetragen. Selbstverständlich ist jedoch im Bedarfsfalle auch eine andere Ausgestaltung der Entgasungstrommel 3 möglich.

## Patentansprüche

1. Verwendung des bei einem Verfahren zur pyrolytischen Behandlung von Abfallstoffen mit organischem Inhalt anfallenden Pyrolysereststoffes, der über ein Wasserbad ausgetragen wird, zur Reinigung industrieller, gewerblicher oder kommunaler Abwässer, belastete Trinkwässer, Deponiesickerwässer oder wässriger Sonderabfälle von organischen Verunreinigungen und Schwermetallen mittels Filtration, wozu der Pyrolysereststoff auf mindestenes 10% Feuchteanteil gehalten wird und in ein oder mehrere parallel oder hintereinandergeschaltete, belüftete Filterbecken bzw. Filtrationsreaktor (17,26) eingebracht wird, und die zu filternden bzw. zu reinigenden Abwässer, belastete Trinkwässer, Deopiniesickerwässer oder flüssiger Sonderabfälle durch den nassen Pyrolysereststoff bis zur Erschöpfung dessen physikalischen Adsorptionskraft gepumpt werden.

2. Verfahren zur Reinigung industrieller, gewerblicher oder kommunaler Abwässer, belastete Trinkwässer, Deponiesickerwässer oder wässriger Sonderabfälle von organischen Verunreinigungen und Schwermetallen,
**dadurch gekennzeichnet**, daß der bei der Gewinnung von verwertbarem Gas bei der Abfallaufbereitung nach dem Pyrolyseverfahren anfallende Pyrolysereststoff mit mindestens 10% Feuchteanteil in ein oder mehrere, parallel oder hintereinandergeschaltete, belüftete Filterbecken bzw. Filtrationsreaktoren (17,26) eingebracht wird, wobei die zu filternden bzw. zu reinigenden Abwässer, belastete Trinkwässer, Deponiesickerwässer oder flüssigen Sonderabfälle durch den Pyrolysereststoff bis zur Erschöpfung dessen physikalischen Adsorptionskraft gepumpt werden.

3. Verfahren nach Anspruch 2,
der Pyrolysereststoff nach Erschöpfung seiner physikalischen Adsorptionskraft mit kalziumhaltigen Verbindungen vermischt wird, danach zu formstabilen Pellets gepreßt und anschließend bei wenigstens annähernd 1200 °C oder mehr ausgeglüht wird, wobei die Schwermetalle in die mineralische Struktur von komplexen Silikaten eingebaut werden.

4. Verfahren nach Anspruch 3,
**dadurch gekennzeichnet**, daß die dabei entstehenden heißen Abgase zur Beheizung der Verschweleinrichtung (Schweltrommel 3) und/ oder der Trocknung feuchter Abfallstoffe vor deren Einbringung in die Verschweleinrichtung zugeführt werden.

5. Verfahren nach Anspruch 2,
**dadurch gekennzeichnet**, daß der Pyrolysereststoff nach Erschöpfung seiner physikalischen Adsorptionskraft zu Staub gemahlen und mit Säuren oder Säuregemischen oder anderen Lösungsmitteln oder Lösungsvermittlern derart vermischt wird, daß ein wesentlicher Teil der an dem Pyrolysereststoff gebundene Metalle, Metallverbindungen und Legierungen in Lösung geht und einer Wiederverwertung zugeführt werden kann.

6. Verfahren nach Anspruch 5,
**dadurch gekennzeichnet**, daß die ungelösten Reststoffe mit kalziumhaltigen Verbindungen und Puzzolanen vermischt werden, danach zu formstabilen Pellets gepreßt und anschließend bei wenigstens annähernd 1200 °C oder mehr ausgeglüht werden.

7. Verfahren nach Anspruch 2,
**dadurch gekennzeichnet**, daß der Pyrolysereststoff zur Aktivierung mit oxidierenden Medien, z.B. Salpetersäurepermanganat oder CO₂, behandelt wird.

8. Verfahren nach Anspruch 2,
**dadurch gekennzeichnet**, daß der Pyrolysereststoff zur Aktivierung seiner Porenoberfläche beim oder im Anschluß an den Austrag aus der Verschwelungseinrichtung (Schweltrommel 3) auf bis zu 750 °C erhitzt wird, bevor er durch den Wasserbadaustrag (23) ausgetragen wird.

9. Verfahren nach Anspruch 2,
**dadurch gekennzeichnet**, daß dem Eintragungsmaterial in die Verschwelungseinrichtung (Schweltrommel 3) oder dem Pyrolysereststoff vor, nach oder während dem Wasserbad zur besseren Bindung von organischen Verunreinigungen und Schwermetallen, Schichtsilikate und tonige Mineralien, wie z.B. Zeolithe, Betonite, Montmorillonite, Rodonite, zudosiert werden.

10. Verfahren nach Anspruch 2,
**dadurch gekennzeichnet**, daß der flüssigkeitsgesättigte und abgekühlte Pyrolysereststoff in ein oder mehrere hintereinandergeschaltete, belüftete Filterbecken (17) oder Filtrationsreaktoren (26) eingebracht und mit Batchkulturen, insbesondere Mikroorganismen der Bakterienstämme aus den Familien der Aureobacter, Candida, Cryptococus und Pseudomonas oder auch für bestimmte Zwecke gezüchtete Bakterien, geimpft wird.

11. Verfahren nach Anspruch 10,
**dadurch gekennzeichnet**, daß in einem oder mehreren Filterbecken (17) bzw. (26) zusätzlich oder in getrennten Becken Algenkulturen, insbesondere Blau-Grün- und/oder Kieselalgen oder auch für bestimmte Zwecke gezüchtete Algen, angezüchtet werden.

12. Verfahren nach Anspruch 11,
**dadurch gekennzeichnet**, daß Blaualgen der Gattung Microcytis, Aphanizomenon und Oscillatoria angezüchtet werden.

13. Anlage zur Durchführung des Verfahrens nach einem der Ansprüche 2 bis 12, mit einer Abfall-/Müllzerkleinerungseinrichtung, einer Verschwelungs- bzw. Entgasungseinrichtung (Entgasungstrommel 3) mit einem Einlaß für den zerkleinerten Müll, mit einer Schwelgasabzugsleitung (4) und mit einem Auslaß für festen Pyrolysereststoff, an welchen ein Wasserbadaustrag (23) angeschlossen ist,
**gekennzeichnet durch** ein oder mehrere hintereinandergeschaltete Filterbecken (17) oder Filtrationsreaktoren (26) für den Pyrolysereststoff mit mindestens 10% Feuchteanteil, mit Belüftungseinrich- tung (27A,27B), und Zu- und Ableitungen (16A,16B, 25,35B,28A,28B) für die Ein- und Austragung der zu reinigenden Wässer und flüssigen Sonderabfälle.

14. Anlage nach Anspruch 13,
**dadurch gekennzeichnet**, daß der oder die Filterbecken (17) oder Filtrationsreaktor (26) mit Impfungsmittel (41) für Bakterienstämme und/oder die Anzucht von Algen oder Blaualgen versehen ist bzw. sind.

15. Anlage nach Anspruch 13 oder 14,
**dadurch gekennzeichnet**, daß eine am jeweiligen Filterbecken (17) oder Filtrationsreaktor (26) angebrachte Abzugseinrichtung (28A,28B) zum kontinuierlichen Abzug einer gesteuerten Menge von Pyrolysereststoff vorgesehen ist, die über Leitungen (36A,36B,38) mit einer Trocknungs- und Kalzium-Silizium-Vermischungsanlage (29) mit nachgeschalteter Brikettierpresse (31) verbunden ist.

16. Anlage nach Anspruch 15,
**dadurch gekennzeichnet**, daß eine Teilstromleitung (42) von der Sammelleitung (38) zur Trocknungs- und Kalzium-Silizium-Vermischungsanlage (29) abzweigt, welche zu einer Vermischeinrichtung (43) mit frischem Pyrolysereststoff führt, von welcher eine Rückführungsleitung (44) in das Filterbecken (17) bzw. den Filtrationsreaktor (26) führt.

17. Anlage nach einem der Ansprüche 13 bis 15,
**dadurch gekennzeichnet**, daß für den gesamten abgezogenen Pyrolysereststoff eine Mahlvorrichtung vorgesehen ist, an die sich eine Durchmischungseinrichtung mit Säuren, Säuregemischen oder sonstigen Lösemitteln, wie Komplexbildner, Lösevermittler, anschließt, worauf für die gelösten Schwermetalle eine Filtereinrichtung zur Abtrennung und gegebenenfalls Rückgewinnung folgt, während für die verbleibenden ungelösten Reststoffe eine Trocknungs- und Kalzium-Silizium-Vermischungsanlage mit nachgeschalteter Brikettiereinrichtung vorgesehen ist.

18. Anlage nach einem der Ansprüche 13 bis 17,
**dadurch gekennzeichnet**, daß zur Innertisirung des Pyrolysereststoffes nach der Erschöpfung seiner physikalischen Adsorptionskraft ein Gleichstrom-Kalzinierofen (32) vorgesehen ist.

19. Anlage nach einem der Ansprüche 13 bis 18,
**dadurch gekennzeichnet**, daß vor oder nach der Entgasungseinrichtung (Schweltrommel 3) eine Beimischeinrichtung (2) für Schichtsilikate, tonige Mineralien und dergleichen vorgesehen ist.

20. Anlage nach einem der Ansprüche 13 bis 19,
**dadurch gekennzeichnet**, daß zwischen der Entgasungseinrichtung (Schweltrommel 3) und dem Wasserbadaustrag (23) eine Erhitzungskammer (22) angeordnet ist.

## Claims

1. Use of the pyrolysis residue produced in a process for the pyrolytic treatment of waste materials with an organic content and discharged via a water bath for removing organic impurities and heavy metals from industrial, commercial or municipal waste water, contaminated drinking water, refuse dump drainage water or aqueous special waste by means of filtration, to which end the pyrolysis residue is maintained at a moisture content of at least 10 % and is introduced into one or more aerated filter basins or filtration reactors (17, 26) connected in parallel or in series, and the waste water, contaminated drinking water, refuse dump drainage water or liquid special waste to be filtered or purified is pumped through the wet pyrolysis residue until its capacity for physical adsorption is exhausted.

2. Process for removing organic impurities and heavy metals from industrial, commercial or municipal waste water, contaminated drinking water, refuse dump drainage water or liquid special waste, characterised in that the pyrolysis residue produced during the extraction of usable gas in waste treatment by pyrolysis with a moisture content of at least 10 % is introduced into one or more aerated filter basins or filtration reactors (17, 26) connected in parallel or in series, the waste water, contaminated drinking water, refuse dump drainage water or liquid special waste to be filtered or purified being pumped through the pyrolysis residue until its capacity for physical adsorption is exhausted.

3. Process according to claim 2, characterised in that, once its capacity for physical adsorption has been exhausted, the pyrolysis residue is mixed with calcium-containing compounds, after which it is pressed into dimensionally stable pellets and then is annealed at at least approximately 1200°C or more, the heavy metals being incorporated into the mineral structure of complex silicates.

4. Process according to claim 3, characterised in that the hot waste gases produced are used to heat the carbonisation means (carbonisation drum 3) and/or to dry moist waste materials before they are introduced into the carbonisation means.

5. Process according to claim 2, characterised in that, once its capacity for physical adsorption has been exhausted, the pyrolysis residue is pulverised and is mixed with acids or acid mixtures or other solvents or solubilisers in such a manner that a substantial part of the metals, metal compounds and alloys combined with the pyrolysis residue dissolves and can be reused.

6. Process according to claim 5, characterised in that the undissolved residue is mixed with calcium-containing compounds and puzzolanes, after which it is pressed into dimensionally stable pellets and then is annealed at at least approximately 1200°C or more.

7. Process according to claim 2, characterised in that the pyrolysis residue is treated with oxidising media, e.g. nitric acid permanganate or CO₂ for activation.

8. Process according to claim 2, characterised in that, for activation of its pore surface, the pyrolysis residue is heated to 750°C during or after discharge from the carbonisation means (carbonisation drum 3) before it is discharged through the water bath outlet (23).

9. Process according to claim 2, characterised in that phyllosilicates and clayey minerals, e.g. zeolites, bentonites, montmorillonites, rhodonites are added to the material fed into the carbonisation means (carbonisation drum 3) or the pyrolysis residue before, after or during the water bath for improved bonding of organic impurities and heavy metals.

10. Process according to claim 2, characterised in that the liquid-saturated and cooled pyrolysis residue is introduced into one or more aerated filter basins (17) or filtration reactors (26) connected in series and is inoculated with batch cultures, especially microorganisms of the bacterial strains from the Aureobacter, Candida, Cryptococus and Pseudomonas families or also bacteria cultivated for specific purposes.

11. Process according to claim 10, characterised in that algal cultures, especially blue-green algae and/or diatoms or also algae cultivated for specific purposes are cultivated in one or more filter basins (17) or (26) additionally or in separate basins.

12. Process according to claim 11, characterised in that blue-green algae of the species Microcytis, Aphanizomenon and Oscillatoria are cultivated.

13. Installation for carrying out the process according to one of claims 2 to 12, comprising a waste/refuse grinding means, a carbonisation or degassing means (degassing drum 3 ) with an inlet for the ground refuse, a carbonisation gas discharge line (4) and an outlet for solid pyrolysis residue to which a water bath outlet (23) is connected, characterised by one or more filter basins (17) or filtration reactors (26) connected in series for the pyrolysis residue with a moisture content of at least 10 %, with an aeration means (27A, 27B) and supply and discharge lines (16A, 16B, 25, 35B, 28A, 28B) for the feeding and discharge of the water and liquid special waste to be purified.

14. Installation according to claim 13, characterised in that the filter basin or basins (17) or filtration reactors (26) is/are provided with inoculation means (41) for bacterial strains and/or the cultivation of algae or blue-green algae.

15. Installation according to claim 13 or claim 14, characterised in that a discharge means (28A, 28B) fitted to the respective filter basin (17) or filtration reactor (26) is provided for the continuous discharge of a controlled quantity of pyrolysis residue, and is connected via lines (36A, 36B, 38) to a drying and calcium-silicon mixing installation (29) with a subsequent briquetting press (31).

16. Installation according to claim 15, characterised in that a branch line (42) branches off from the collecting line (38) to the drying and calcium-silicon mixing installation (29), and leads to a mixing means (43) with fresh pyrolysis residue, from where a return line (44) leads back into the filter basin (17) or the filtration reactor (26).

17. Installation according to one of claims 13 to 15, characterised in that a grinding device is provided for all of the pyrolysis residue discharged, to which a mixing means with acids, acid mixtures or other solvents, such as complexers, solubilisers, is connected, followed by a filtering means for separation and possibly recovery of the dissolved heavy metals, while drying and calcium-silicon mixing installation with a subsequent briquetting device is provided for the remaining undissolved residue.

18. Installation according to one of claims 13 to 17, characterised in that a d.c. calcining furnace (32) is provided for rendering the pyrolysis residue inert once its capacity for physical adsorption has been exhausted.

19. Installation according to one of claims 13 to 18, characterised in that a mixing means (2) for phyllosilicates, clayey minerals and the like is provided before or after the degassing means (carbonisation drum 3).

20. Installation according to one of claims 13 to 19, characterised in that a heating chamber (22) is arranged between the degassing means (carbonisation drum 3) and the water bath outlet (23).

## Revendications

1. Utilisation du résidu de pyrolyse qui résulte d'un procédé de traitement pyrolitique de déchets à contenu organique et qui est extrait d'un bain d'eau, pour épurer des eaux usées industrielles, artisanales ou communales, de l'eau potable chargée, de l'eau de drainage de décharge ou des déchets spéciaux aqueux par élimination de polluants organiques et de métaux lourds au moyen d'une filtration, où l'on maintient le résidu de pyrolyse à une humidité d'au moins 10% et on le place dans un bassin filtrant aéré ou un réacteur de filtration (17, 26) ou dans plusieurs de ces bassins ou réacteurs connectés en parallèle ou en série, et l'on pompe les eaux usées à filtrer et à épurer, l'eau potable chargée, l'eau de drainage de décharge ou les déchets spéciaux liquides à travers le résidu de pyrolyse humide jusqu'à épuisement de la capacité physique d'adsorption de celui-ci.

2. Procédé pour épurer des eaux usées industrielles, artisanales ou communales, de l'eau potable chargée, de l'eau de drainage de décharge ou des déchets spéciaux humides pour en éliminer des polluants organiques et des métaux lourds, **caractérisé** en ce que le résidu de pyrolyse avec une humidité d'au moins 10 %, résultant de la production de gaz utilisable lors du traitement de déchets selon le procédé de pyrolyse, est placé dans un bassin filtrant aéré ou un réacteur de filtration (17, 26), ou dans plusieurs de ces bassins ou réacteurs connectés en parallèle ou en série, et en ce que l'on pompe les eaux usées à filtrer et à épurer, l'eau potable chargée, l'eau de drainage de décharge ou les déchets spéciaux liquides à travers le résidu de pyrolyse jusqu'à épuisement de la capacité physique d'adsorption de celui-ci.

3. Procédé selon la revendication 2, **caractérisé** en ce que le résidu de pyrolyse, après épuisement de sa capacité physique d'adsorption, est mélangé à des composés calciques, puis est pressé en boulettes à forme stable et ensuite est cuit à au moins approximativement 1200°C ou plus, de sorte que les métaux lourds sont incorporés à la structure minérale de silicates complexes.

4. Procédé selon la revendication 3, **caractérisé** en ce que les gaz d'échappement chauds ainsi créés sont utilisés pour chauffer le dispositif de pyrolyse (tambour de pyrolyse 3) et/ou pour chauffer des déchets humides avant leur introduction dans le dispositif de pyrolyse.

5. Procédé selon la revendication 2, **caractérisé** en ce que le résidu de pyrolyse, après épuisement de sa capacité physique d'adsorption, est moulu en poudre et est mélangé à des acides ou des mélanges d'acides ou à d'autres solvants ou unisseurs, de telle manière qu'une partie substantielle des métaux, composés métalliques et alliages qui sont liés au résidu de pyrolyse se dissout et peut être conduite à un recyclage.

6. Procédé selon la revendication 5, **caractérisé** en ce que les résidus non dissous sont mélangés à des combinés calciques et des pouzzolanes, puis sont pressés en boulettes à forme stable et ensuite sont cuits à au moins approximativement 1200°C ou plus.

7. Procédé selon la revendication 2, **caractérisé** en ce que le résidu de pyrolyse est traité pour activation avec des agents oxydants, par exemple du permanganate nitrique ou du CO₂.

8. Procédé selon la revendication 2, **caractérisé** en ce que le résidu de pyrolyse est chauffé jusqu'à 750°C pour activer la surface de ses pores lors de ou à la suite de son extraction du dispositif de pyrolyse (tambour de pyrolyse 3), avant son extraction à travers le bain d'eau (23).

9. Procédé selon la revendication 2, **caractérisé** en ce que l'on ajoute des quantités dosées de silicates feuilletés et de minéraux argileux, tels que par exemple des zéolites, la bentonite, la montmorillonite, la rodonite, au matériau introduit dans le dispositif de pyrolyse (tambour de pyrolyse 3) ou au résidu de pyrolyse avant, après ou pendant le passage dans le bain d'eau, pour mieux fixer des polluants organiques et des métaux lourds.

10. Procédé selon la revendication 2, **caractérisé** en ce que l'on place le résidu de pyrolyse, saturé de liquide et refroidi, dans un bassin de filtration aéré (17) ou un réacteur de filtration (26), ou dans plusieurs de ces bassins ou réacteurs connectés en série, et on l'ensemence avec des cultures microbiologiques, notamment des micro-organismes, des souches bactériennes, des familles Aureobacter, Candida, Cryptococcus et Pseudomonas ou également d'autres bactéries cultivées pour des applications déterminées.

11. Procédé selon la revendication 10, **caractérisé** en ce que l'on cultive, dans un ou plusieurs bassins filtrants (17, 26) à titre additionnel ou dans des bassins séparés, des cultures d'algues, notamment des algues bleu-vert et/ou des algues siliceuses ou également des algues cultivées pour des applications déterminées.

12. Procédé selon la revendication 11, **caractérisé** en ce que l'on cultive des algues bleues du genre Microcytis, Aphanizomenon et Oscillatoria.

13. Installation pour la mise en oeuvre du procédé selon l'une des revendications 2 à 12, comportant un dispositif broyeur de déchets ou ordures, un dispositif de pyrolyse et de dégazage (tambour de dégazage 3) ayant une entrée pour les ordures broyées, un conduit (4) d'extraction de gaz de pyrolyse et une sortie pour le résidu solide de pyrolyse, à laquelle est raccordée une sortie à bain d'eau (23), **caractérisée** par un bassin filtrant (17) ou un réacteur de filtration (26), ou plusieurs de ces bassins ou réacteurs connectés en série, pour le résidu de pyrolyse contenant au moins 10% d'humidité, avec des dispositifs d'aération (27A, 27B) et des conduits d'amenée et d' évacuation (16A, 16B, 25, 35B, 28A, 28B) pour amener et évacuer l'eau à épurer et les déchets spéciaux liquides.

14. Installation selon la revendication 13, **caractérisée** en ce que le ou les bassins filtrants (17) ou réacteurs de filtration (26) est ou sont pourvus de moyens d'ensemencement (41) pour des souches bactériennes et/ou la culture d'algues ou d'algues bleues.

15. Installation selon la revendication 13 ou 14, **caractérisée** en ce qu'elle comporte un dispositif d'extraction (28A, 28B) disposé sur chaque bassin filtrant (17) ou réacteur de filtration (26) pour extraire en continu une quantité commandée de résidu de pyrolyse, ces dispositifs étant raccordés par des conduits (36A, 36B, 38) à une installation de séchage et de mélange de matières calciques et siliceuses (29), suivie d'une presse à briquettes (31).

16. Installation selon la revendication 15, **caractérisée** en ce qu'un conduit de dérivation (42) part du conduit collecteur (38) allant à l'installation de séchage et de mélange (29) et mène à un dispositif de mélange (43) avec du résidu frais de pyrolyse, d'où un conduit de recyclage (44) mène au bassin filtrant (17) ou au réacteur de filtration (26).

17. Installation selon l'une des revendications 13 à 15, **caractérisée** en ce qu'elle comporte, pour l'ensemble du résidu de pyrolyse extrait, un dispositif de mouture auquel est raccordé un dispositif de mélange avec des acides, des mélanges d'acides ou des solvants spéciaux tels que des complexants ou des unisseurs, suivi d'un dispositif de filtration pour séparer et éventuellement récupérer les métaux lourds en solution, tandis que pour les résidus restants non dissous, il est prévu une installation de séchage et de mélange de matières calciques et siliceuses, suivie d'un dispositif à briquettes.

18. Installation selon l'une des revendications 13 à 17, **caractérisée** en ce qu'elle comporte un four de calcination à courant continu (32) pour rendre inerte le résidu de pyrolyse après épuisement de sa capacité physique d'adsorption.

19. Installation selon l'une des revendications 13 à 18, **caractérisée** en ce qu'elle comporte, avant ou après le dispositif de dégazage (tambour de pyrolyse 3) un dispositif mélangeur (2) pour ajouter des silicates feuilletés, des minéraux argileux et analogues.

20. Installation selon l'une des revendications 13 à 19, **caractérisée** en ce qu'une chambre de réchauffage (22) est disposée entre le dispositif de dégazage (tambour de pyrolyse 3) et la sortie à travers un bain d'eau (23).
